# EUROPEAN PATENT SPECIFICATION

(11) **EP 4 655 512 B1**
(45) Date of publication and mention of the grant of the patent: **18.11.2026**
(21) Application number: 23742306.6
(22) Date of filing: 14.07.2023
(51) Int. Cl.: F16B 19/10, F16B 39/34

(54) **FIXTURE SET**
BEFESTIGUNGSSET
ENSEMBLE DE FIXATION

(30) Priority: 25.01.2023 EP 23153221
(43) Date of publication of application: 03.12.2025
(73) Proprietor: Locinox, 8790 Waregem (BE)
(72) Inventor: TALPE, Joseph, 8551 Heestert-Zwevegem (BE)
(74) Representative: Gevers Patents
(86) International application number: PCT/EP2023/069721
(87) International publication number: WO 2024/156376

(56) References cited:
- EP-A1- 1 653 091
- WO-A1-2007/009998
- WO-A1-2019/228896
- GB-A- 536 553
- GB-A- 663 997
- JP-A- 2006 057 776
- US-A- 2 392 491

## Description

### Technical field

The present invention relates to a fixture set for fixing an accessory part to a tubular metal profile having a wall, which wall has a front surface, a back surface and a circular opening therethrough.

### Background

A known fixture set comprises a bolt having a bolt head and an at least partially threaded shaft configured to be inserted through an opening in the accessory part and through the opening in the wall; a splitter which has a longitudinal axis and which is sized to be partially axially insertable in said opening in the wall in a direction parallel to said longitudinal axis, the splitter comprising a through-hole by which the splitter is configured to be slid onto the shaft of the bolt towards the bolt head in a first direction substantially parallel to said longitudinal axis; and an integrally formed metal anchor sized to be axially insertable through said opening in the wall, the anchor comprising a threaded part configured to be screwed to the bolt shaft thread and at least two radially expandable arms extending axially away from said threaded part, said arms having a free end configured to lock the anchor against said back surface upon radial expansion of said arms, wherein the splitter and/or the anchor comprise at least two wedge surfaces for expanding said radially expandable arms of said anchor radially when said splitter is urged to slide in said first direction, and wherein the splitter and the anchor further comprise mutually interlockable structures for substantially restricting rotation of said anchor relative to said splitter.

Such a fixture set is described in WO 2007/009998 and in WO 2019/228896 where it is used to fix a lock bolt keeper to a tubular post. However, more generally, the fixture set is used for fixing an accessory part to a wall, the accessory part typically being: a door keeper; a mounting clamp; a hinge part; a lock bolt keeper; a door actuator; a light fixture; a mounting frame provided to mount an additional part; etc. In these applications, the accessory part often experiences vibrations, e.g. due to the impact of a door impacting the door keeper. These vibrations tend to loosen the bolt and the anchor and may result in their separation. Separation of the bolt and the anchor cause that the anchor falls down on the side of the back surface of the wall, i.e. the surface opposite of the front surface of the wall. Often the back surface of the wall is an inner surface of a hollow post. Upon the anchor falling within said post, it is no longer possible to retrieve it. Moreover, even if the vibrations do not fully separate the bolt and the anchor, a less severe separation causes leeway between the anchor arms and the back surface. In other words, the accessory part becomes fixed less tightly to the support and may begin to rattle, shake, etc. which is undesired. This may cause noise, misaligned elements, seems appearing, etc. There is thus a need to securely fix the bolt to the anchor such that vibrations do not result in the unintentional separation of the bolt and the anchor.

To that end, the fixture set disclosed in WO 2019/228896 is provided with multiple intentional damaged regions to the thread of the threaded bottom part of the anchor. Such thread damage increases the friction between the bolt and the anchor to prevent unintentional loosening of the anchor and the bolt. However, such a solution has been found to have several disadvantages.

Firstly, intentionally damaging the thread of the threaded bottom part is difficult to apply consistently. Considering this is a mass-produced fixture set, manufacturing consistency is very important.

Secondly, the intentional damage only makes it more difficult to screw in the bolt for the first time. The screwing of the bolt along the intentional damage in fact fixes (or at least lessens) said damages by overruling the damaged areas. This in turn reduces the securing effect of the intentional damages against vibrational loosening of the bolt.

Thirdly, the initial difficulty of screwing the bolt into the bottom part of the anchor causes high tension to be applied onto the splitter. This may cause the splitter to break off of the accessory part in case the splitter is integrally formed therewith. More often, however, the splitter is a separate part fitted into a recess in the accessory part. The high tension tends to damage and deform the recess in the accessory part, in particular in case this recess is formed in a plastic part.

Fourthly, it has been found that the intentional damage on the tread can only be applied on a small area of the bottom part, i.e. only the area which is easily reachable. This small area often proves insufficient to apply the sufficient number of intentional damaged regions required to create the desired securing effect.

### Disclosure of the invention

It is an object of the present invention to provide a fixture set which overcomes or at least alleviates the afore-mentioned problems, i.e. which reduces the risk that the anchor becomes detached from the bolt due to vibrations.

This object is achieved according to the invention in that the fixture set further comprises a securing ring having an opening arranged to receive the shaft of the bolt, the securing ring being disposed adjacent the threaded part of the anchor facing the splitter and being irrotatable with respect to the anchor, wherein the securing ring forms, in use, a friction fit between the shaft of the bolt and the anchor or the splitter for preventing the unintentional separation of the bolt.

The addition of a securing ring to the fixture set prevents (or at least reduces the risk) of an unintentional separation of the bolt from the remainder of the fixture set due to vibrations acting on the bolt during use. More specifically, the securing ring is positioned on the inner side of the anchor (i.e. the side facing the splitter and the back surface of the wall) or in the splitter. In other words, when assembling the fixture set, the threaded bolt shaft is first received in the securing ring and only afterwards in the threaded part of the anchor. When tightening the bolt, the securing ring forms a friction fit between the shaft of the bolt and the anchor or the splitter to prevent (or at least reduce the risk) of an unintentional separation.

The provision of a separate element (i.e. the securing ring) to prevent loosening is easier to reliable mass produce when compared to the known way of damaging the threads in the anchor. Furthermore, the securing ring inherently fully surrounds the threaded bolt shaft and thus has a larger contact area when compared to the local damage in the threads, which larger contact area increases the friction generated.

Due to the placement of the securing ring adjacent the threaded part of the anchor facing the splitter, the securing ring can be easily provided for in the existing manufacturing process of the fixture sets. There is only a single additional manufacturing step (i.e. placing the securing ring on the anchor) and no significant modification is required form the existing anchor, splitter, and bolt.

In anembodiment of the present invention slits are present between adjacent ones of said at least two radially expandable arms, the securing ring comprising at least one protrusion extending into one of the slits for preventing rotation of the securing ring with respect to the anchor. Firstly, the slits provide a convenient way to provide the radially expandable arms. More specifically, although other ways are possible to provide radially expandable arms in a substantially cylindrical anchor (e.g. locally weakened regions between the arms), the removal of material to form slits is easiest to implement and most consistent in a mass-produced fixture set. Secondly, providing a protrusion on the securing ring located in a corresponding slit is also a convenient manner to irrotatably position the securing ring with respect to the anchor. Again, although other ways are possible (e.g. adhesion, welding, etc.), these usually involve an additional manufacturing step which is undesired.

In a preferred embodiment of the present invention the radially expandable arms adjacent said at least one protrusion comprise a locally widened region near the threaded part of the anchor, said at least one protrusion of the securing ring being located between the locally widened regions and the threaded part of the anchor. A shortest distance between a locally widened region and an end of a respective slit is more preferably larger than a thickness of said at least one protrusion measured in said first direction to allow a sliding motion of the securing ring with respect to the anchor in said first direction. The locally widened region causes that the protrusion of the securing ring is in essence trapped between the end of a slit and the locally widened region. As such, the securing ring cannot accidentally become disengaged from the anchor during assembly or earlier during shipping from the factory to a store. An end-user thus need not be concerned with correctly positioning the securing ring with respect to the anchor. Moreover, allowing a minimal sliding motion (due to a certain minimal distance between the locally widened region and the end of the slit being larger than the thickness of a protrusion) of the securing ring with respect to the anchor is advantageous in certain embodiments as described further.

In an embodiment of the present invention the securing ring is elastically deformable. This enables the securing ring, once deformed during assembly of the fixture set, to exert a force on the anchor/splitter and/or the bolt due to elasticity urging the securing ring to return to its undeformed (or less deformed) state. This force increases the friction between the securing ring and the anchor/splitter and/or the bolt which is beneficial as a higher amount of vibrations can then be effectively reduced.

In an embodiment of the present invention the ring is made of a polymeric material, preferably a polymeric material having a high coefficient of friction, e.g. polyamide 6. In an alternative embodiment of the present invention the ring is made of a metal, preferably a spring metal or a soft metal. A soft metal is used to refers to metals that are soft compared to stainless steel, for example aluminum. These alternatives allow the skilled person to select the desired material depending on the intended use of the fixture set and the amount of vibration to be expected.

In an embodiment of the present invention an inner diameter of the opening in the securing ring is smaller than an outer diameter of the shaft of the bolt. As such, when assembling the fixture set, the threaded part of the bolt is forced through a too narrow opening of the securing ring. This causes deformation, tension, etc. of the securing ring which provides the desired friction fit. However, threaded bolts are known to have a high manufacturing tolerance making it difficult to determine the desired dimension of the inner diameter of the opening in the securing ring.

In an embodiment of the present invention the opening of the securing ring is threaded, the thread of the securing ring being configured to be overruled when screwing the bolt in the threaded part of the anchor. Preferably, the thread of the securing ring and the thread of the shaft have a different pitch. As such, when assembling the fixture set, the threaded part of the securing ring is overruled by the thread on the bolt. This causes deformation, tension, etc. of the securing ring which provides the desired friction fit. Moreover, causing the thread to be overruled can be achieved in various manners (e.g. having a thread with a sufficiently small diameter compared to the diameter of the threaded bolt). However, using different pitches is robust as there is little manufacturing tolerance on the thread pitch of the bolt when compared to that on the bolt diameter.

Furthermore, since the securing ring is preferably only provided with a single thread, the start of this thread may not be aligned with the start of the thread of the anchor. Allowing a minimal sliding motion (due to a certain minimal distance between the locally widened region and the end of the slit being larger than the thickness of a protrusion) enables the securing ring to be slid away from the anchor threaded part thus aligning the starts of the threads. The certain minimal distance is therefore ideally in the same order as the lead of the thread on the securing ring.

In a preferred embodiment of the present invention the opening of the securing ring comprises a single thread which extends over at most 360°. This allows to manufacture the securing ring using molding operations without the need for a complex multi-part mold that would be required in case the thread extends over more than 360° as this cannot be readily unmolded. It also allows for an easy manufacture of a metal securing ring using punching operations.

In a preferred embodiment of the present invention the thread of the securing ring and the thread of the shaft have a different thread angle with the thread angle of the securing ring being larger than the thread angle of the shaft. In particular, the thread angle of the securing ring is at least 70°and more in particular at least 75° and is preferably at most 85°. The present inventor has found that the use of a threaded securing ring with a high thread angle causes more friction when compared to a different pitch. More specifically, the high thread angle causes friction between both flanks of the securing ring thread and the bolt shaft thread, whereas the use of a different pitch results in friction between only a single flank.

Furthermore, when the securing ring is made from a polymeric material, the higher thread angle will results in a compression of the thread of the securing ring as the bolt is normally made from metal. This compression will further increase the friction between the threads thus providing a better securing effect of the securing ring.

A thread angle comprised between 70° (or 75°) and 85° has been found advantageous to cooperate with commonly available bolts whose shafts have a thread angle of 60°.

In an embodiment of the present invention said radial expansion of said arms is caused by deformation of the metal anchor. This avoids having to rely on multi-material anchors that include different material bending regions.

In an embodiment of the present invention the splitter further comprises: a radially projecting portion configured to abut against said front surface; a sleeve portion extending axially away from said radially projecting portion and configured to fit within said opening, said sleeve portion having a minimum bounding cylinder; a wedge portion extending axially away from said sleeve portion and comprising said at least two wedge surfaces which have a decreasing diameter away from said sleeve portion; and at least one catch which is situated entirely within said minimum bounding cylinder, wherein the free end of a respective one of said at least two arms is barbed, the barbed free end being configured to be caught in said catch when the anchor is urged to slide in a second direction, opposite to said first direction, after having slid said anchor onto said splitter in said first direction with said barbed free end having passed said catch, and wherein, preferably, when the anchor is urged to slide in said second direction after having slid said anchor onto said splitter in said first direction with said barbed free end having passed said catch, the arm having the barbed fee end is configured to partly radially contract.

By having an integrally formed metal anchor similar to the known fixture set disclosed in WO 2007/009998, the tensile strength is substantially the same. **In** other words, the tensile strength of the fixture set according to the present invention is not significantly decreased with respect to the fixture set disclosed in WO 2007/009998 and WO 2019/228896.

Although the arms of the metal anchor have a low elasticity when compared to plastic arms, it has been surprisingly found that the metal arm with the barbed free end is able to sufficiently radially contract when loosening the bolt and/or when the anchor is pushed off the splitter to get caught in a catch. In other words, the catch ensures that the metal anchor is caught on the splitter when removing the bolt notwithstanding the quite small contraction of the arms of the anchor. As such, similar to the fixture set disclosed in WO 2019/228896, the anchor remains affixed to the splitter when after having removing the bolt it is reinserted into the anchor, meaning that the anchor is not lost and can be reused when reinserting the bolt to reaffix the accessory part.

In a preferred embodiment of the present invention, the anchor is made of a metal which has an elasticity such that when the barbed free ends of the anchor are each expanded over a distance of 2 mm from said longitudinal axis, they contract over at most 40%, in particular over at most 35% and more in particular over at most 30% of this distance when they are released. An advantage of such a metal is that it does not have to be a so-called spring metal, which is much more expensive than metals which are less elastic.

In a preferred embodiment of the present invention, the anchor is made of a metal which has a yield strength of at most 400 MPa, preferably at most 300 MPa and preferably at most 250 MPa, said metal having a yield strength of at least 50 MPa, more preferably at least than 100 MPa, advantageously at least 150 MPa and more advantageously at least 200 MPa. It has been found that manufacturing the anchor from a metal having such a yield strength enables the arms having the barbed free ends to apply a sufficient strength when the barbed free ends are caught in their respective catches. In other words, when caught in the catch, the arms keep applying a force against the splitter, i.e. a force directed in the radial direction. This force ensures that the interlocking catches and barbs do not accidently release, for example when the bolt is entirely removed and then inserted.

In a preferred embodiment of the present invention, each arm has a barbed free end which are each arranged to cooperate with a catch. Providing a catch for each arm of the anchor improves the robustness and/or reliability of the fixture set. For each arm a separate catch may be provided or one catch, for example a circumferential groove, may act as a common catch for all of the arms.

In an embodiment of the present invention said mutually interlockable structures comprise at least one radially extended ridge on the splitter, said at least two arms of said anchor being guided by said ridge. More specifically, although other ways are possible to provide radially expandable arms in a substantially cylindrical anchor (e.g. locally weakened regions between the arms), the removal of material to form slits is easiest to implement and most consistent in a mass-produced fixture set. As a slit is provided, providing a protrusion/ridge on the splitter located in a corresponding slit is a convenient manner to irrotatably position the splitter with respect to the anchor.

In an embodiment of the present invention the fixture set comprises said accessory part, said accessory part preferably comprising one of: a door keeper, a mounting clamp, a hinge part, a lock bolt reception element, a closure member actuator, a bolt and a mounting frame, wherein the splitter and the accessory part comprise further mutually interlockable structures for substantially restricting rotation of said splitter relative to said accessory part, the further mutually interlockable structures comprising one of: a solid connection between the accessory part and the splitter; and in case the splitter and the accessory part are separate parts, a non-circular recess in the accessory part and a non-circular portion of the splitter disposed in the non-circular recess in the accessory part. These alternatives allow the skilled person to select the desired further mutually interlockable structures depending on the intended use of the fixture set and the force that the accessory part may be subjected to.

### Brief description of the drawings

Other particularities and advantages of the invention will become apparent from the following description of some particular embodiments of a mortice lock and of a keep according to the present invention. The reference numerals used in this description relate to the annexed drawing.
Figure 1 shows a perspective view of a fixture set according to the present invention with an accessory part fixed to a wall.
Figure 2 shows a perspective view of an anchor, a securing ring, and a splitter of a fixture set according to the present invention.
Figures 3 and 4 shows a longitudinal cross-sectional view of figures 1 and 2 respectively.
Figure 5 shows an exploded view of a fixture set according to the present invention.
Figure 6 shows an exploded view of an anchor and a securing ring of a fixture set according to the present invention.
Figures 7A and 7B show details of figure 6.
Figure 8 shows a cross-section through the securing ring.
Figure 9 shows a perspective view of an alternative securing ring of a fixture set according to the present invention.

### Description of the invention

The present invention will be described with respect to particular embodiments and with reference to certain drawings but the invention is not limited thereto but only by the claims.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "substantially" includes variations of +/- 10% or less, preferably +/-5% or less, more preferably +/-1% or less, and more preferably +/-0.1% or less, of the specified condition, in as far as the variations are applicable to function in the disclosed invention. It is to be understood that the term "substantially A" is intended to also include "A".

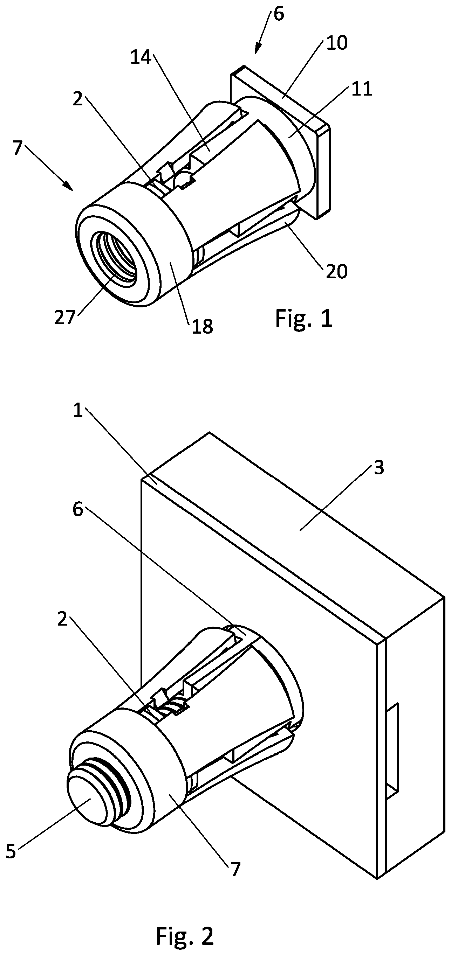

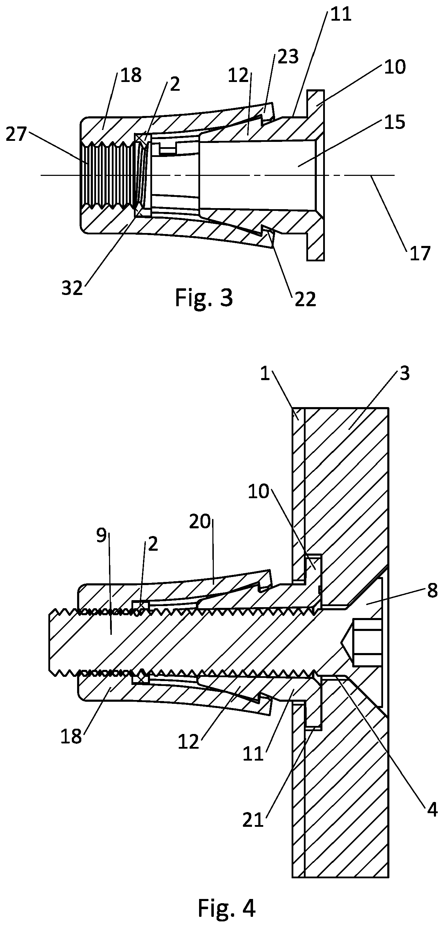

Figure 1 illustrates an example of a fixture set according to the present invention used to fix an accessory part 3 onto a wall 1 of a hollow metal post or frame. The accessory part 3 is shown as a solid block in the figures to indicate that this is not crucial in view of the present invention. The accessory part typically is: a door keeper; a mounting clamp; a hinge part; a lock bolt keeper; a door actuator; a light fixture; a mounting frame provided to mount an additional part; etc. The accessory part 3 is fixed against the front surface of the wall 1. The accessory part 3 is fixed to the wall 1 by means of a fixture set which extend through an opening 4 through said wall 1 as shown in more detail in figure 3.

The fixture set according to the present invention comprises a standard externally threaded bolt 5, a splitter 6, an internally threaded anchor 7, and a securing ring 2. The bolt 5 has an at least partly threaded shaft 9 configured to be screwed into a corresponding internal screw thread 27 of the anchor 7. The anchor 7, in its unexpanded form, can be inserted in the circular hole 4 drilled in the wall 1, whilst the splitter 6 can only be partially inserted in this hole 4. Moreover, the anchor 7, in its expanded position, is held by the bolt 5, by means of the screw threads 9, 27, against the inside surface of the wall 1, thus anchoring the whole fixture set together with the accessory part to the post or frame.

The fixture set according to the present invention is mainly used to fix accessory parts 3 to a hollow support, e.g. a post, for outdoors use. Such a post typically has an external width of about 4 cm to about 6 cm, in particular an external width of about 4, about 5 or about 6 cm. As the anchor 7 needs to be inserted in the unexpanded form, the combined length of the anchor 4 and the portion of the splitter 6 within the post must be lower than the available space within the post. Consequently, the anchor 7, in its unexpanded form, typically has a length of at most 3 cm and preferably at most 2.5 cm.

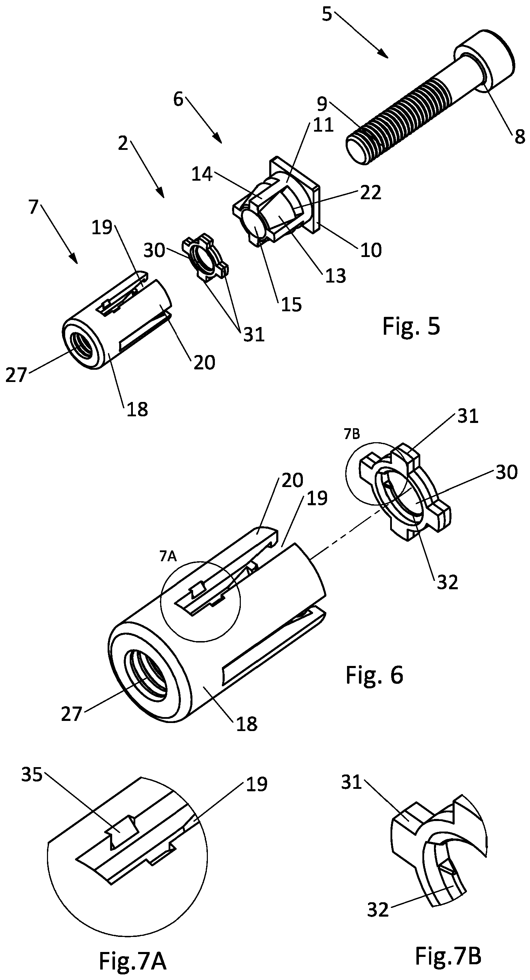

Figure 5 shows an exploded view of the elements of the fixture set before assembly. The bolt 5 has a bolt head 8 which is provided onto the at least partly threaded shaft 9. The bolt head 8 can have varying shapes and may also be sunk into the accessory part 3 as illustrated in figure 3. The splitter 6 comprises a non-circular, in this case square, radially projecting head 10 which is larger than the openings 4 in the hollow frame. In this way the head of the splitter 6 forms a flange 10 which is configured to abut against the front surface of the wall 1 as shown in figure 3. The flange 10 is disposed in a corresponding non-circular recess 21. The splitter 6 further has a sleeve portion 11 extending axially away from the flange 10 and configured to fit within said opening 4 as shown in figure 3. In the appended figures, the sleeve portion 11 has a circular cross-section, but it will be readily appreciated that other cross-sectional shapes are possible (e.g. a hexagonal cross-section), although a circular cross-section is preferred for achieving a maximum strength. The sleeve portion 11 transitions into a wedge portion 12 having conical, in particular frustroconical, wedge surfaces 13 separated by ribs 14 as indicated in figure 2. The splitter 6 is also provided with a through-hole 15 by which the splitter 6 is configured to be slid onto the shaft 9 of the bolt 5 towards the bolt head 8 in a first direction substantially parallel to the longitudinal axis 17 of the through-hole 15.

The illustrated anchor 7 globally consists of a hollow cylindrical piece comprising a threaded bottom part 18 with inner screw thread 27 and with four slits 19 forming arms 20 which can be radially expanded by means of the splitter 6.

The splitter 6 and anchor 7 are shaped so that, when urged against each other, the ribs 14 of the splitter 6 engage the slits 19 of the anchor 7, substantially restricting rotation of the anchor 7 relative to the splitter 6, and the conical wedge surfaces 13 of the splitter 6 force the expandable arms 20 of the anchor 7 radially outwards, thus expanding the outer diameter of the anchor 7 to a size lager than the diameter of the opening 4 in the wall 1. In practice, it turns out that the radial expansion of the arms 20 is caused by a deformation of the metal anchor 7. In a non-illustrated embodiment, the placement of the wedge surface is reversed in such that the free end of each arm 20 is wedge-shaped and the splitter 6 is mainly formed by the sleeve portion 11.

As illustrated in figure 3, the back side of the accessory part 3 comprises a square recess 21 arranged to receive the square head 10 of the splitter 6. When the square splitter head 10 is inserted into the recess 21, their form-locking engagement substantially restricts rotation of the splitter 6 relative to the accessory part 3. Although in figure 3, the recess 21 is illustrated as square, any non-circular form that would restrict rotation of the splitter head 10 could be considered. For instance, a single elongated groove could accommodate several splitter heads 10 and hold them against rotation. An advantage of making the recess 21 in the form of an elongated groove is that such a groove can easily be obtained when producing the accessory part by an extrusion process. Instead of using a form-locking device for restricting rotation of the splitter 6 with respect to the accessory part 3, it is also possible to restrict the rotation of the splitter 6 relative to the accessory part 3 with a solid connection between them. In other words, one or more splitters 6 are integrally formed (in one piece) with the accessory part 3. The splitters and the accessory part may in particular be injection moulded from a plastic material or cast moulded from a metal or a metal alloy.

For fixing the accessory part 3 to the wall 1, the bolts 5 are first introduced through openings in the accessory part 3, and then assembled with one or more splitters 6 and a corresponding number of anchors 7, the square heads 10 of the splitters 6 thereby fit into the square recess 21 or elongated groove of the accessory part 3. The accessory part 3 with the bolts 5, splitters 6 and anchors 7 is then placed onto the front surface of the wall 1, with the fixture set introduced through the corresponding holes 4 in the wall 1. As may be readily perceived from figures 1 and 3, when tightening the bolts 5, the anchors 7 will be held against rotation by their slits 19 in engagement with the ribs 14 of the splitters 6, and the splitters 6 will be themselves held against rotation by the splitter heads 10 in engagement with the recesses 21 of the accessory part 3. As a consequence, the radially expandable arms 20 of the anchor 7 will be pushed against the conical wedge surfaces 13 of the splitter 6 and cause these to expand outwards and ultimately tightly fix themselves against the back side of the wall 1.

In the illustrated embodiment, the splitter 6 further comprises at least one catch 22, preferably a same number as catches 22 as the number of wedge surfaces 13 or arms 20, i.e. four catches 22 in the appended figures. The one or more catches 22 are configured to cooperate with a corresponding number of barbs 23 in the free ends of the arms 20 when the bolt 5 is unscrewed from the anchor 7. Specifically, as illustrated in figures 1 to 4, when the bolt 5 is removed from the anchor (i.e. when the anchor 7 is urged to slide in a second direction), after having slid the anchor 7 onto the splitter 6 with said barbed free end 23 having passed said catch 22, the barbed free end 23 interlocks with the catch 22 thereby preventing the anchor 7 becoming detached from the splitter 6. Such a catching action is possible even considering the low elasticity of the metal arms since the catch 22 is placed in a specific area of the splitter 6 as disclosed in WO 2019/228896.

The anchor 7 is made of a relatively rigid metal to provide the desired tensile strength, in particular a tensile strength of at least 10 kN. In order to reduce the cost of the anchor, the metal is preferably not a spring metal but is preferably a metal which has not a high elasticity, and which has in particular not a yield strength higher than 400 MPa, preferably not a yield strength higher than 30 MPa and more preferably not a yield strength higher than 250 MPa. The yield strength of the metal of the anchor is however preferably higher than 50 MPa, more preferably higher than 100 MPa, advantageously higher than 150 MPa and more advantageously higher than 200 MPa so that the required stiffness of the arms can be achieved with a limited thickness thereof. The anchor is in particular made of a metal which has an elasticity such that when the barbed free ends of the anchor are each expanded over a distance of 2 mm from said longitudinal axis, they contract over at most 40%, in particular over at most 35% and more in particular over at most 30% of this distance when they are released. The free ends of the arms of the anchor for example each only contract for about 0.6 mm (i.e. the diameter of the anchor is reduced with 1.2 mm) when the anchor is removed from the splitter after having applied the fixture set onto a wall having a thickness of 2 mm.

In the illustrated embodiments, the catch 22 is formed by a discontinuous groove in the wedge portion (see figure 5) but this may also be provided by a discontinuous groove in the wedge portion 12. Alternatively, the groove may be a continuous circumferential groove. Such a continuous groove can be easily milled in the splitter 6. The entire splitter 6 may however be cast in case the splitter 6 is manufactured from a metal or a metal alloy or the splitter 6 may be injection moulded in case a plastic material is used to manufacture the splitter 6. Such a casting process was used to produce the splitters with discontinuous grooves illustrated in the drawings.

In the illustrated embodiments, the barbs 23 on the free ends of the arms 20 are formed by a notch, in particular a groove, which notch has a depth d which is at least 0.25 mm, preferably at least 0.5 mm, advantageously at least 0.75 mm and more advantageously at least 0.9 mm. Again a groove is preferred as this is easy to mill into the formed metal anchor 7, which anchor is typically manufactured by milling from a stainless steel rod. It will be readily appreciated that the groove(s) forming the catch 22 and/or the barb 23 may in general be formed by a non-groove shaped recess and/or a notch.

The bolt 5 as shown in the appended figures typically has a diameter of between about 6 mm and about 10 mm and is preferably about 8 mm. Consequently, the diameter of the through-hole 15 is typically between 7 and 11 mm and preferably between 8 and 9 mm.

According to the present invention, the fixture set comprises a securing ring 2. The illustrated securing ring 2 comprises a through-hole 30 which allows the shaft 9 of the bolt 5 to pass through the securing ring 2. The securing ring 2 further comprises protrusions 31 on its circumference which fit into the slits 19 of the anchor 7 substantially restricting rotation of the securing ring 2 relative to the splitter 6. Figure 6 illustrates the anchor 7 and securing ring 2 in more detail in an exploded view and shows that the protrusions 31 fit in the slits 19 of the anchor 7. Furthermore, some of the arms 20 of the anchor 7 have been locally deformed in region 35 (viewed in detail in figure 7A) which deformation causes a local narrowing of the slits 19 with the protrusions 31 being held between this local narrowing and the end of a slit 19. This avoids an accidental dislodging of the securing ring 2 from the anchor 7 prior to assembly of the fixture set.

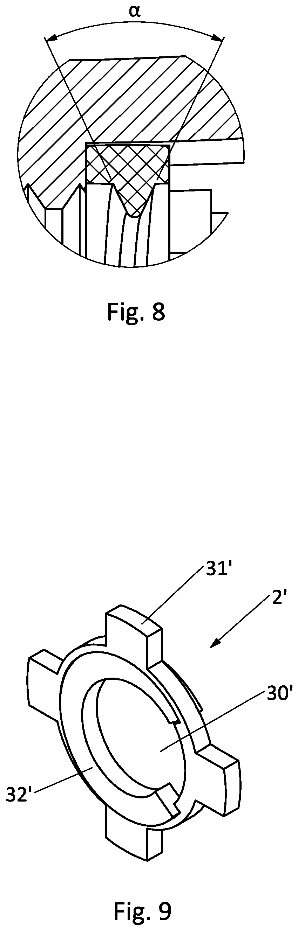

As shown in figures 3 and 4, the securing ring 2 is positioned adjacent the bottom part 18 of the anchor 7 and causes a friction fit of the bolt 5 with respect to the anchor 7. In the illustrated embodiment, this friction fit is achieved by providing a single thread 32 on the inner circumference of the securing ring 2. This thread 32 does not expand over the full 360° as best shown in figure 7B to allow a relatively simple manufacturing using injection moulding. In the illustrated embodiment, the thread 32 has a different (i.e. higher) thread angle α (as indicated in figure 8) than the thread angle of the thread 9 on the bolt 5. As such, when assembling the fixture set, the thread 32 is overruled by the thread 9 which causes the friction fit. Alternatively or additionally, the thread 32 may have a different lead than the thread 9 on the bolt 5. This would also cause, when assembling the fixture set, the thread 32 to be overruled by the thread 9 thus causing the friction fit.

Furthermore, the distance between the region 35 and the end of the slit 19 in the longitudinal direction 17 is larger than the thickness of the protrusion 31 to allow a minimal sliding of the securing ring 2 with respect to the anchor 7 which allows aligning the start thread 32 of the securing ring 2 with the start of the thread 27 in the anchor 7.

In the embodiment shown in figures 1 to 8, the securing ring 2 is injection moulded from a plastic material. However, a securing ring 2' manufactured from metal is shown in figure 9. The metal securing ring 2' likewise comprises a through-opening 30', circumferential protrusions 31', and a thread 32'. The functioning, placement and operation of the securing ring 2' is the same as securing ring 2 and will not be described separately.

In non-illustrated embodiments, the friction fit of the securing ring can also be achieved without resorting to a thread. For example, by making the opening 30 in the securing ring sufficiently small compared to the bolt shaft diameter. It may also be achieved by providing a deformable securing ring that is, when assembling, partly pulled into the threaded engagement of the bolt 5 and the anchor 7.

Although aspects of the present disclosure have been described with respect to specific embodiments, it will be readily appreciated that these aspects may be implemented in other forms within the scope of the invention as defined by the claims.

## Claims

1. A fixture set for fixing an accessory part (3) to a tubular metal profile having a wall (1), which wall has a front surface, a back surface and a circular opening (4) therethrough, the fixture set comprising:
- a bolt (5) having a bolt head (8) and an at least partially threaded shaft (9) configured to be inserted through an opening in the accessory part and through the opening in the wall;
- a splitter (6) which has a longitudinal axis (17) and which is sized to be partially axially insertable in said opening in the wall in a direction parallel to said longitudinal axis, the splitter comprising a through-hole (15) by which the splitter is configured to be slid onto the shaft of the bolt towards the bolt head in a first direction (16) substantially parallel to said longitudinal axis; and
- an integrally formed metal anchor (7) sized to be axially insertable through said opening in the wall, the anchor comprising a threaded part (18) configured to be screwed to the bolt shaft thread and at least two radially expandable arms (20) extending axially away from said threaded part, said arms having a free end (24) configured to lock the anchor against said back surface upon radial expansion of said arms,
wherein the splitter and/or the anchor comprise at least two wedge surfaces (13) for expanding said radially expandable arms of said anchor radially when said splitter is urged to slide in said first direction, and wherein the splitter and the anchor further comprise mutually interlockable structures for substantially restricting rotation of said anchor relative to said splitter,
**characterized in that** the fixture set further comprises a securing ring (2) having an opening (30) arranged to receive the shaft of the bolt, the securing ring being disposed adjacent the threaded part of the anchor facing the splitter and being irrotatable with respect to the anchor, wherein the securing ring forms, in use, a friction fit between the shaft of the bolt and the anchor or the splitter for preventing the unintentional separation of the bolt.

2. The fixture set according to claim 1, **characterized in that** slits (19) are present between adjacent ones of said at least two radially expandable arms, the securing ring comprising at least one protrusion (31) extending into one of the slits for preventing rotation of the securing ring with respect to the anchor.

3. The fixture set according to claim 2, **characterized in that** the radially expandable arms adjacent said at least one protrusion comprise a locally widened region (35) near the threaded part of the anchor, said at least one protrusion of the securing ring being located between the locally widened regions and the threaded part of the anchor.

4. The fixture set according to claim 3, **characterized in that** a shortest distance between a locally widened region and an end of a respective slit is larger than a thickness of said at least one protrusion measured in said first direction to allow a sliding motion of the securing ring with respect to the anchor in said first direction.

5. The fixture set according to any one of the preceding claims, **characterized in that** the securing ring is elastically deformable.

6. The fixture set according to any one of the preceding claims, **characterized in that** the ring is made of either a polymeric material, preferably a polymeric material having a high coefficient of friction, or a metal, preferably a spring metal or a soft metal.

7. The fixture set according to any one of the preceding claims, **characterized in that** the opening of the securing ring is threaded (32), the thread of the securing ring being configured to be overruled when screwing the bolt in the threaded part of the anchor.

8. The fixture set according to claim 7, **characterized in that** the opening of the securing ring comprises a single thread which extends over at most 360°.

9. The fixture set according to claim 7 or 8, **characterized in that** the thread of the securing ring and the thread of the shaft have a different pitch.

10. The fixture set according to any one of claims 7 to 9, **characterized in that** the thread of the securing ring and the thread of the shaft have a different thread angle with the thread angle (α) of the securing ring being larger than the thread angle of the shaft.

11. The fixture set according to claim 10, **characterized in that** the thread angle of the securing ring is at least 70°and in particular at least 75° and is preferably at most 85°.

12. The fixture set according to any one of the preceding claims, **characterized in that** an inner diameter of the opening in the securing ring is smaller than an outer diameter of the shaft of the bolt.

13. The fixture set according to any one of the preceding claims, **characterized in that** the splitter further comprises:
- a radially projecting portion (10) configured to abut against said front surface;
- a sleeve portion (11) extending axially away from said radially projecting portion and configured to fit within said opening, said sleeve portion having a minimum bounding cylinder (27);
- a wedge portion (12) extending axially away from said sleeve portion and comprising said at least two wedge surfaces (13) which have a decreasing diameter away from said sleeve portion; and
- at least one catch (22) which is situated entirely within said minimum bounding cylinder,
wherein the free end of a respective one of said at least two arms is barbed (23), the barbed free end being configured to be caught in said catch when the anchor is urged to slide in a second direction (25), opposite to said first direction, after having slid said anchor onto said splitter in said first direction with said barbed free end having passed said catch, and
wherein, preferably, when the anchor is urged to slide in said second direction after having slid said anchor onto said splitter in said first direction with said barbed free end having passed said catch, the arm having the barbed fee end is configured to partly radially contract.

14. The fixture set according to any one of the preceding claims, **characterized in that** said mutually interlockable structures comprise at least one radially extended ridge (14) on the splitter, said at least two arms of said anchor being guided by said ridge.

15. The fixture set according to any one of the preceding claims, **characterized in that** the fixture set comprises said accessory part (3), said accessory part preferably comprising one of: a door keeper, a mounting clamp, a hinge part, a closure member actuator, a lock bolt reception element, a bolt and a mounting frame,
wherein the splitter and the accessory part comprise further mutually interlockable structures for substantially restricting rotation of said splitter relative to said accessory part, the further mutually interlockable structures comprising one of:
- a solid connection between the accessory part and the splitter; and
- in case the splitter and the accessory part are separate parts, a non-circular recess in the accessory part (21) and a non-circular portion (10) of the splitter disposed in the non-circular recess in the accessory part.

## Patentansprüche

1. Ein Befestigungsset zum Befestigen eines Zubehörteils (3) an einem rohrförmigen Metallprofil mit einer Wand (1), wobei diese Wand eine Frontfläche, eine Rückfläche und eine kreisförmige Öffnung (4) dadurch hat, wobei das Befestigungsset Folgendes umfasst:
- einen Bolzen (5) mit einem Bolzenkopf (8) und einem zumindest teilweise mit einem Gewinde versehenen Schaft (9), konfiguriert, um durch eine Öffnung im Zubehörteil und durch die Öffnung in die Wand eingeführt zu werden;
- einen Spalter (6), welcher eine Längsachse (17) hat und welcher bemessen ist, um teilweise axial in die erwähnte Öffnung in der Wand in eine Richtung parallel zur erwähnten Längsachse eingeführt werden zu können, wobei der Spalter eine Durchgangsöffnung (15) umfasst, durch die der Spalter konfiguriert ist, um in eine erste Richtung (16) im Wesentlichen parallel zur erwähnten Längsachse auf den Schaft des Bolzens zum Bolzenkopf hin geschoben zu werden; und
- einen integral geformten Metallanker (7), bemessen, um axial durch die erwähnte Öffnung in der Wand eingeführt werden zu können, wobei der Anker ein Gewindeteil (18) umfasst, konfiguriert, um auf das Gewinde des Bolzenschafts geschraubt zu werden, und mindestens zwei radial spreizbare Arme (20), die sich axial weg vom erwähnte Gewindeteil ausdehnen, wobei die erwähnten Arme ein freies Ende (24) haben, konfiguriert, um den Anker bei radialer Spreizung der erwähnten Arme gegen die erwähnte Rückfläche zu blockieren,
wobei der Spalter und/oder der Anker mindestens zwei Keilflächen (13) umfassen, um die erwähnten radial spreizbaren Arme des erwähnten Ankers radial zu spreizen, wenn der erwähnte Spalter gezwungen wird, in die erwähnte erste Richtung zu gleiten, und wobei der Spalter und der Anker ferner gegenseitig verblockbare Strukturen umfassen, um die Drehung des erwähnten Ankers in Bezug auf den erwähnten Spalter im Wesentlichen zu beschränken,
**dadurch gekennzeichnet, dass** das Befestigungsset ferner einen Sicherungsring (2) mit einer Öffnung (30) umfasst, angeordnet, um den Schaft des Bolzens aufzunehmen, wobei der Sicherungsring angrenzend an das Gewindeteil des zum Spalter gerichteten Ankers angebracht ist und in Bezug auf den Anker nicht drehbar ist, wobei der Sicherungsring, bei der Anwendung, einen Reibschluss zwischen dem Schaft des Bolzens und dem Anker oder dem Spalter bildet, um der unbeabsichtigten Trennung des Bolzens vorzubeugen.

2. Das Befestigungsset nach Anspruch 1, **dadurch gekennzeichnet, dass** Schlitze (19) zwischen angrenzenden der erwähnten mindestens zwei radial spreizbaren Arme vorhanden sind, wobei der Sicherungsring mindestens einen Vorsprung (31) umfasst, der sich in einen der Schlitze ausdehnt, um der Drehung des Sicherungsringes in Bezug auf den Anker vorzubeugen.

3. Das Befestigungsset nach Anspruch 2, **dadurch gekennzeichnet, dass** die radial spreizbaren Arme angrenzend an den erwähnten mindestens einen Vorsprung eine lokal aufgeweitete Region (35) nahe dem Gewindeteil des Ankers umfassen, wobei der erwähnte mindestens eine Vorsprung des Sicherungsringes sich zwischen den lokal aufgeweiteten Regionen und dem Gewindeteil des Ankers befindet.

4. Das Befestigungsset nach Anspruch 3, **dadurch gekennzeichnet, dass** der kürzeste Abstand zwischen einer lokal aufgeweiteten Region und einem Ende eines zugehörigen Schlitzes größer als eine Dicke des erwähnten mindestens einen Vorsprungs gemessen in der erwähnten ersten Richtung ist, um eine Gleitbewegung des Sicherungsringes in Bezug auf den Anker in die erwähnte erste Richtung zuzulassen.

5. Das Befestigungsset nach irgendeinem der vorigen Ansprüche, **dadurch gekennzeichnet, dass** der Sicherungsring elastisch verformbar ist.

6. Das Befestigungsset nach irgendeinem der vorigen Ansprüche, **dadurch gekennzeichnet, dass** der Ring entweder aus einem Polymermaterial, bevorzugt einem Polymermaterial mit einem hohen Reibungskoeffizienten, oder einem Metall, bevorzugt einem Federmetall oder einem Weichmetall, hergestellt ist.

7. Das Befestigungsset nach irgendeinem der vorigen Ansprüche, **dadurch gekennzeichnet, dass** die Öffnung des Sicherungsringes mit einem Gewinde (32) versehen ist, wobei das Gewinde des Sicherungsringes konfiguriert ist, um überwunden zu werden, wenn der Bolzen in den Gewindeabschnitt des Ankers geschraubt wird.

8. Das Befestigungsset nach Anspruch 7, **dadurch gekennzeichnet, dass** die Öffnung des Sicherungsringes ein einfaches Gewinde umfasst, das sich über höchstens 360° ausdehnt.

9. Das Befestigungsset nach Anspruch 7 oder 8, **dadurch gekennzeichnet, dass** das Gewinde des Sicherungsringes und das Gewinde des Schaftes eine unterschiedliche Steigung haben.

10. Das Befestigungsset nach irgendeinem der Ansprüche 7 bis 9, **dadurch gekennzeichnet, dass** das Gewinde des Sicherungsringes und das Gewinde des Schaftes einen unterschiedlichen Flankenwinkel haben, wobei der Flankenwinkel (α) des Sicherungsringes größer als der Flankenwinkel des Schaftes ist.

11. Das Befestigungsset nach Anspruch 10, **dadurch gekennzeichnet, dass** der Flankenwinkel des Sicherungsringes mindestens 70°, insbesondere mindestens 75° und bevorzugt höchstens 85° beträgt.

12. Das Befestigungsset nach irgendeinem der vorigen Ansprüche, **dadurch gekennzeichnet, dass** ein Innendurchmesser der Öffnung im Sicherungsring kleiner als ein Außendurchmesser des Schaftes des Bolzens ist.

13. Das Befestigungsset nach irgendeinem der vorigen Ansprüche, **dadurch gekennzeichnet, dass** der Spalter ferner Folgendes umfasst:
- einen radial vorragenden Abschnitt (10), konfiguriert, um an die erwähnte Frontfläche anzuliegen;
- einen Hülsenabschnitt (11), welcher sich axial weg vom erwähnten radial vorragenden Abschnitt erstreckt und konfiguriert ist, um in die erwähnte Öffnung zu passen, wobei der erwähnte Hülsenabschnitt einen minimalen Hüllzylinder (27) hat;
- einen Keilabschnitt (12), welcher sich axial weg vom erwähnte Hülsenabschnitt erstreckt und mindestens zwei Keilflächen (13) umfasst, die einen abnehmenden Durchmesser weg vom erwähnte Hülsenabschnitt haben; und
- mindestens eine Raste (22), welche sich zur Gänze innerhalb des erwähnten minimalen Hüllzylinders befindet,
wobei das freie Ende (24) eines zugehörigen einen der erwähnten zumindest zwei Arme mit Widerhaken (23) versehen ist, wobei das freie Ende mit Widerhaken konfiguriert ist, um in die erwähnte Raste einzurasten, wenn der Anker gezwungen wird, in eine zweite Richtung (25), der erwähnten ersten Richtung entgegengesetzt, zu gleiten, nachdem der erwähnte Anker in die erwähnte erste Richtung auf den erwähnten Spalter geschoben wurde, wobei das erwähnte freie Ende mit Widerhaken die erwähnte Raste passiert hat, und
wobei, bevorzugt, wenn der Anker gezwungen wird, in die erwähnte zweite Richtung zu gleiten, nachdem der erwähnte Anker in die erwähnte erste Richtung auf den erwähnten Spalter geschoben wurde und das erwähnte freie Ende mit Widerhaken die erwähnte Raste passiert hat, der Arm mit dem freien Ende mit Widerhaken konfiguriert ist, um sich teilweise radial zu verengen.

14. Das Befestigungsset nach irgendeinem der vorigen Ansprüche, **dadurch gekennzeichnet, dass** die erwähnten gegenseitig verblockbaren Strukturen mindestens eine radial gestreckte Kante (14) auf dem Spalter umfassen, wobei die erwähnten mindestens zwei Arme des erwähnten Ankers durch die erwähnte Kante geführt werden.

15. Das Befestigungsset nach irgendeinem der vorigen Ansprüche, **dadurch gekennzeichnet, dass** das Befestigungsset das erwähnte Zubehörteil (3) umfasst, wobei das erwähnte Zubehörteil bevorzugt eines der folgenden Elemente umfasst: einen Türschließhaken, eine Montageklemme, ein Scharnierteil, einen Schließelement-Betätiger, ein Schlossriegel-Aufnahmeelement, einen Riegel und einen Montagerahmen,
wobei der Spalter und das Zubehörteil weitere gegenseitig verblockbare Strukturen umfassen, um die Drehung des erwähnten Spalters in Bezug auf das erwähnte Zubehörteil im Wesentlichen zu beschränkten, wobei die weiteren gegenseitig verblockbaren Strukturen eines der folgenden Elemente umfassen:
- eine feste Verbindung zwischen dem Zubehörteil und dem Spalter; und
- falls der Spalter und das Zubehörteil getrennte Teile sind, eine nichtkreisförmige Vertiefung im Zubehörteil (21) und einen nicht-kreisförmigen Abschnitt (10) des Spalters, angebracht in der nicht-kreisförmigen Vertiefung im Zubehörteil.

## Revendications

1. Ensemble de fixation destiné à fixer une pièce accessoire (3) à un profilé en métal tubulaire comportant une paroi (1), laquelle paroi présente une surface avant, une surface arrière et une ouverture circulaire (4) la traversant, l'ensemble de fixation comprenant :
- un boulon (5) comportant une tête de boulon (8) et une tige (9) au moins partiellement filetée, configurée pour être insérée à travers une ouverture pratiquée dans la pièce accessoire et à travers l'ouverture de la paroi ;
- un diviseur (6) qui présente un axe longitudinal (17) et qui est dimensionné pour permettre son insertion partielle dans le sens axial dans ladite ouverture de la paroi, dans une direction parallèle audit axe longitudinal, le diviseur comprenant un trou traversant (15) grâce auquel le diviseur peut être glissé sur la tige du boulon vers la tête de boulon, selon une première direction (16) sensiblement parallèle audit axe longitudinal ; et
- un ancrage en métal (7) formé d'un seul tenant, dimensionné pour pouvoir être inséré axialement à travers ladite ouverture dans la paroi, l'ancrage comprenant une partie filetée (18) configurée pour être vissée sur le filetage de tige de boulon et au moins deux bras radialement extensibles (20) s'étendant axialement à partir de ladite partie filetée, lesdits bras présentant une extrémité libre (24) configurée pour bloquer l'ancrage contre ladite surface arrière lors de l'expansion radiale desdits bras,
dans lequel le diviseur et/ou l'ancrage comportent au moins deux surfaces en coin (13) destinées à étendre radialement lesdits bras radialement extensibles dudit ancrage lorsque ledit diviseur est poussé à coulisser dans ladite première direction, et dans lequel le diviseur et l'ancrage comportent en outre des structures à verrouillage mutuel pour limiter sensiblement la rotation dudit ancrage par rapport audit diviseur,
**caractérisé en ce que** l'ensemble de fixation comprend en outre une bague de fixation (2) comportant une ouverture (30) agencée pour recevoir la tige du boulon, la bague de fixation étant disposée à proximité de la partie filetée de l'ancrage faisant face au diviseur et étant immobile en rotation par rapport à l'ancrage, dans lequel la bague de fixation forme, en utilisation, un ajustement par friction entre la tige du boulon et l'ancrage ou le diviseur afin d'empêcher la séparation involontaire du boulon.

2. Ensemble de fixation selon la revendication 1, **caractérisé en ce que** des fentes (19) sont présentes entre des bras adjacents parmi lesdits au moins deux bras radialement extensibles, la bague de fixation comprenant au moins une saillie (31) s'étendant dans l'une des fentes pour empêcher la rotation de la bague de fixation par rapport à l'ancrage.

3. Ensemble de fixation selon la revendication 2, **caractérisé en ce que** les bras radialement extensibles adjacents à ladite au moins une saillie comportent une région localement élargie (35) à proximité de la partie filetée de l'ancrage, ladite au moins une saillie de la bague de fixation étant située entre les régions localement élargies et la partie filetée de l'ancrage.

4. Ensemble de fixation selon la revendication 3, **caractérisé en ce qu'**une distance minimale entre une région localement élargie et une extrémité d'une fente respective est supérieure à l'épaisseur de ladite au moins une saillie mesurée dans ladite première direction, afin de permettre un mouvement de glissement de la bague de fixation par rapport à l'ancrage dans ladite première direction.

5. Ensemble de fixation selon l'une quelconque des revendications précédentes, **caractérisé en ce que** la bague de fixation est élastiquement déformable.

6. Ensemble de fixation selon l'une quelconque des revendications précédentes, **caractérisé en ce que** la bague est réalisée soit en un matériau polymère, de préférence un matériau polymère présentant un coefficient de frottement élevé, soit en un métal, de préférence un métal à ressort ou un métal tendre.

7. Ensemble de fixation selon l'une quelconque des revendications précédentes, **caractérisé en ce que** l'ouverture de la bague de fixation est filetée (32), le filetage de la bague de fixation étant configuré pour être surfilé lors du vissage du boulon dans la partie filetée de l'ancrage.

8. Ensemble de fixation selon la revendication 7, **caractérisé en ce que** l'ouverture de la bague de fixation comprend un seul filetage s'étendant sur au plus 360°.

9. Ensemble de fixation selon la revendication 7 ou 8, **caractérisé en ce que** le filetage de la bague de fixation et le filetage de la tige ont un pas différent.

10. Ensemble de fixation selon l'une quelconque des revendications 7 à 9, **caractérisé en ce que** le filetage de la bague de fixation et le filetage de la tige présentent un angle de filetage différent, l'angle de filetage (α) de la bague de fixation étant supérieur à l'angle de filetage de la tige.

11. Ensemble de fixation selon la revendication 10, **caractérisé en ce que** l'angle de filetage de la bague de fixation est d'au moins 70°, et en particulier d'au moins 75°, et est de préférence d'au plus 85°.

12. Ensemble de fixation selon l'une quelconque des revendications précédentes, **caractérisé en ce que** le diamètre intérieur de l'ouverture dans la bague de fixation est inférieur au diamètre extérieur de la tige du boulon.

13. Ensemble de fixation selon l'une quelconque des revendications précédentes, **caractérisé en ce que** le diviseur comprend en outre :
- une portion saillante radiale (10) configurée pour venir en butée contre ladite surface avant ;
- une portion en manchon (11) s'étendant axialement à partir de ladite portion saillante radiale et configurée pour s'ajuster à l'intérieur de ladite ouverture, ladite portion en manchon présentant un cylindre d'encadrement minimal (27) ;
- une portion en coin (12) s'étendant axialement à partir de ladite portion en manchon et comprenant lesdites au moins deux surfaces en coin (13) dont le diamètre diminue à mesure qu'elles s'éloignent de ladite portion en manchon ; et
- au moins un cran (22) situé entièrement à l'intérieur dudit cylindre d'encadrement minimal,
dans lequel l'extrémité libre de l'un respectif desdits au moins deux bras est munie d'un crochet (23), l'extrémité libre munie d'un crochet étant configurée pour être retenue dans ledit cran lorsque l'ancrage est poussé à coulisser dans une deuxième direction (25), opposée à ladite première direction, après avoir fait coulisser ledit ancrage sur ledit diviseur dans ladite première direction, l'extrémité libre munie d'un crochet ayant alors dépassé ledit cran, et
dans lequel, de préférence, lorsque l'ancrage est poussé à coulisser dans ladite deuxième direction après avoir fait coulisser ledit ancrage sur ledit diviseur dans ladite première direction, l'extrémité libre munie d'un crochet ayant dépassé ledit cran, le bras comportant l'extrémité libre munie d'un crochet est configuré pour se contracter partiellement dans le sens radial.

14. Ensemble de fixation selon l'une quelconque des revendications précédentes, **caractérisé en ce que** lesdites structures à verrouillage mutuel comprennent au moins une arête s'étendant radialement (14) sur le diviseur, lesdits au moins deux bras dudit ancrage étant guidés par ladite arête.

15. Ensemble de fixation selon l'une quelconque des revendications précédentes, **caractérisé en ce que** l'ensemble de fixation comprend ladite pièce accessoire (3), ladite pièce accessoire comprenant de préférence l'un des éléments suivants : un arrêtoir de porte, un collier de montage, une pièce de charnière, un actionneur d'élément de fermeture, un élément de réception de pêne, un boulon et un cadre de montage, dans lequel le diviseur et la pièce accessoire comprennent des autres structures à verrouillage mutuel destinées à limiter sensiblement la rotation dudit diviseur par rapport à ladite pièce accessoire, lesdites autres structures à verrouillage mutuel comprenant l'un des éléments suivants :
- une liaison rigide entre la pièce accessoire et le diviseur ; et
- dans le cas où le diviseur et la pièce accessoire sont des pièces distinctes, un évidement non circulaire dans la pièce accessoire (21) et une portion non circulaire (10) du diviseur disposée dans l'évidement non circulaire de la pièce accessoire.
